# EUROPEAN PATENT APPLICATION

(11) **EP 0 828 203 A2**
(43) Date of publication of application: **11.03.1998**
(21) Application number: 97115621.1
(22) Date of filing: 09.09.1997
(51) Int. Cl.: G03H 1/26, G03H 1/02

(54) **Multicolor hologram recording structure**

(30) Priority: 09.09.1996 JP 237857/96
(71) Applicant: DAI NIPPON PRINTING CO., LTD., Tokyo 162 (JP)
(72) Inventor: Nishikawa, Shingo, c/o Dai Nippon Printing Co.,Ltd, Shinjuku-Ku, Tokyo 162 (JP)
(74) Representative: VOSSIUS & PARTNER

(57) **Abstract**

A multicolor hologram display structure which is capable of presenting an intermediate color with high reproducibility and which requires a relaxed accuracy for alignment between hologram original plates of different colors. The multicolor hologram display structure has at least two multi-recorded or superimposed volume holograms that diffract light of different wavelengths, e.g. red light and green light, respectively. The multicolor hologram display structure includes an intermediate color pattern region consisting essentially of dots (7) formed from two of the at least two multi-recorded or superimposed holograms and a background (8) of either of the two holograms that is recorded between the dots. A region of the volume holograms may be subjected to color tuning to reproduce a color different from the recorded color.

## Description

The present invention relates to a multicolor hologram recording structure and, more particularly, to a multicolor hologram recording structure capable of displaying the number of colors that is greater than the number of recording wavelengths by using volume holograms recorded with two or three wavelengths.

It has heretofore been known to form a multicolor hologram display structure by multi-recording or superimposing three volume holograms of three colors, i.e. R (red), G (green) and B (blue), and using additive color mixing. It has also been known to form a multicolor hologram display structure by arranging R, G and B pixels or dots in a side-by-side configuration and effecting additive color mixing according to the dot area ratio (hereinafter occasionally referred to as "dot percent").

The present applicant proposed, in Japanese Patent Application Unexamined Publication (KOKAI) No. 6-332355, a method of obtaining a color pattern varying in reconstructed color according to the position from a volume hologram containing the record of uniform interference fringes by using a swelling film. The principle of the proposed method is as follows: A swelling film is prepared by mixing a monomer or an oligomer, a photopolymerization initiator, etc. into a binder polymer as in the case of photopolymers. Before or after the swelling film is brought into close contact with a photosensitive material, e.g. a photopolymer, having interference fringes already recorded therein, a predetermined quantity of light is applied to the swelling film to polymerize and thus deactivate the monomer or oligomer contained in the swelling film in a predetermined proportion, thereby adjusting the amount of remaining active monomer or oligomer. The adjusted amount of monomer or oligomer is diffused into the photosensitive material having interference fringes recorded therein to effect swelling, thereby accurately adjusting the distance between the interference fringes to a predetermined value, and thus adjusting the reconstructed wavelength to a predetermined one. After the swelling by the described method, light or heat is applied to the photosensitive material having interference fringes recorded therein, thereby enabling the diffused monomer or oligomer to be fixed in the interference fringes. Thus, a hologram excellent in the reconstructed color preserving stability can be obtained. Moreover, a color pattern can be formed on the hologram by imparting a spatial distribution to light applied to the photosensitive material.

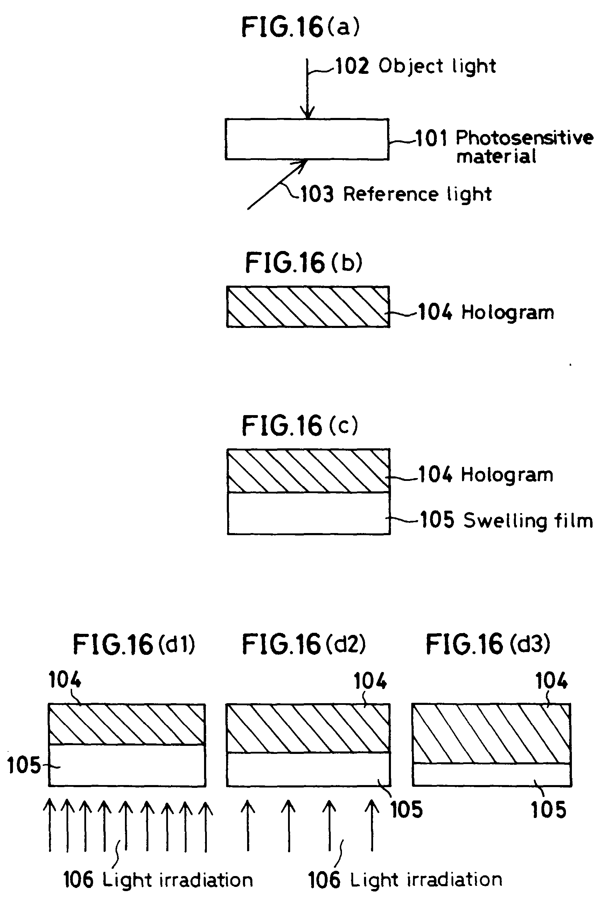

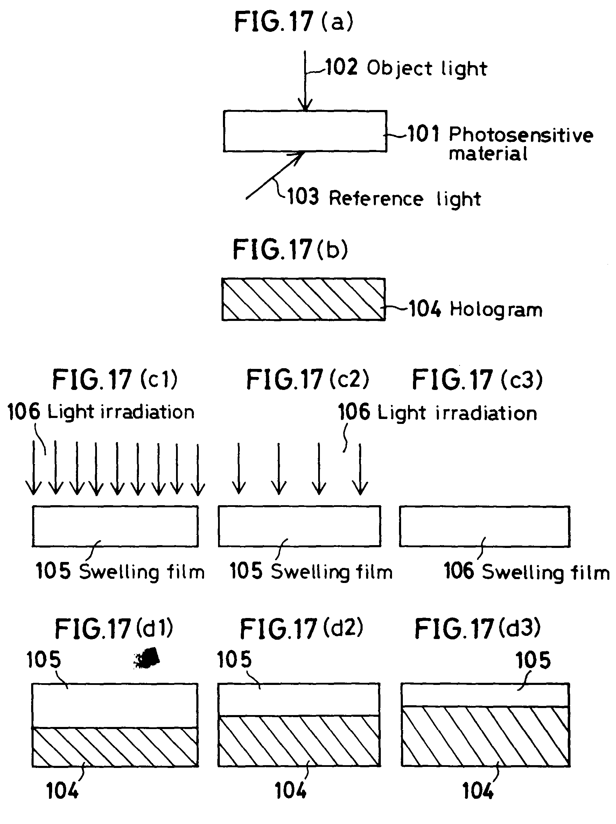

The above method will be described below more specifically with reference to the accompanying drawings. Figs. 16(a) to 16(d3) are diagrams for describing the principle of a process wherein after the swelling film has been brought into close contact with the photosensitive material, light is applied to the swelling film to deactivate the swelling agent (a monomer or an oligomer) contained in the swelling film. Figs. 17(a) to 17(d3) are diagrams for describing the principle of a process wherein before the swelling film is brought into close contact with the photosensitive material, light is applied to the swelling film to deactivate the swelling agent contained in the swelling film. In the former process, in Fig. 16(a), a photosensitive material 101, e.g. a photopolymer, is illuminated with object light 102 and reference light 103 from both sides of the photosensitive material 101 to record interference fringes therein. Consequently, a volume hologram 104 as shown in Fig. 16(b) is obtained. Next, as shown in Fig. 16(c), a swelling film 105 prepared by mixing a monomer or an oligomer, a photopolymerization initiator, etc. into a binder polymer is brought into close contact with the volume hologram 104, and the stack thus formed is heated to increase the degree of diffusion of the penetrative monomer or oligomer in the swelling film 105. Before or simultaneously with the heating process, the stack is irradiated with light 106 from the hologram side or the swelling film side as shown in Figs. 16(d1) to 16(d3). By the irradiation with light 106, a part or the whole of the active penetrative monomer or oligomer in the swelling film 105 is polymerized and thus deactivated in a proportion corresponding to the amount of light 106 applied to the swelling film 105, thus losing the penetrativity (diffusibility). Accordingly, when the amount of light 106 applied to the swelling film 105 is large as shown in Fig. 16(d1), almost all the active penetrative monomer or oligomer in the swelling film 105 is deactivated. Consequently, almost no monomer or oligomer penetrates into the hologram 104 even if the stack of the hologram 104 and the swelling film 105 is heated thereafter. Therefore, if the volume hologram 104 is recorded by light of wavelength in the blue region, for example, in Fig. 16(a), the hologram 104 undergoing the swelling step shown in Fig. 16(d1) does not substantially swell. Accordingly, the hologram 104 diffracts blue light and reconstructs blue color. In contrast, when the amount of light 106 applied to the swelling film 105 is intermediate as shown in Fig. 16(d2), about a half of the active penetrative monomer or oligomer in the swelling film 105 is deactivated. Consequently, when the stack of the volume hologram 104 and the swelling film 105 is heated thereafter, the remaining penetrative monomer or oligomer penetrates into the hologram 104, causing the hologram 104 to swell to a medium extent. Accordingly, the hologram 104 undergoing the swelling step shown in Fig. 16(d2) diffracts green light, which is longer in wavelength than blue, and reconstructs green color. When light irradiation 106 is not carried out as shown in Fig. 16(d3), the active penetrative monomer or oligomer in the swelling film 105 remains as it is. Consequently, when the stack of the hologram 104 and the swelling film 105 is heated thereafter, almost all the penetrative monomer or oligomer penetrates into the hologram 104, causing the hologram 104 to swell to the full. Accordingly, the hologram 104 undergoing the swelling step shown in Fig. 16(d3) diffracts red light, which is longer in wavelength than green, and reconstructs red color. Thus, reconstructed color can be controlled as desired in the range of from red to blue by adjusting the amount of light 106 applied to the swelling film 105, which is placed in close contact with the hologram 104.

In the latter process, at the step shown in Figs. 17(a) and 17(b), a volume hologram 104 is obtained in the same way as in Figs. 16(a) and 16(b). Meanwhile, as shown in Figs. 17(c1) to 17(c3), a swelling film 105 is prepared by mixing a monomer or an oligomer, a photopolymerization initiator, etc. into a binder polymer, and the swelling film 105 is irradiated with a predetermined amount of light 106. Consequently, a part or the whole of the active penetrative monomer or oligomer in the swelling film 105 is deactivated in a proportion corresponding to the amount of light 106 applied to the swelling film 105, thus losing the penetrativity (diffusibility). Then, as shown in Figs. 17(d1) to 17(d3), the swelling film 105 irradiated with light 106 is brought into close contact with the hologram 104 and heated in the same way as in Fig. 16(c). Consequently, the degree of swelling of the hologram 104 varies according to the amount of light 106 applied to the swelling film 105. Accordingly, reconstructed light can be controlled as desired in the range of from red to blue by adjusting the amount of light 106 applied to the swelling film 105 as in the case of the process shown in Figs. 16(a) to 16(d3).

It should be noted that the swelling film 105 is prepared by mixing a monomer or an oligomer, a photopolymerization initiator, etc. into a binder polymer as in the case of photopolymers for hologram recording. Accordingly, a photopolymer for hologram recording can be used as the swelling film 105 without particularly preparing a material for the swelling film 105.

However, the method wherein intermediate colors are generated by multi-recording or superimposing volume holograms of three colors, i.e. R, G and B, needs to adjust the intensity of light for recording a hologram of each color. This becomes a problem when the method is used in an actual process for producing multicolor hologram display structures in large quantity with high reproducibility and high stability.

On the other hand, the method wherein intermediate colors are generated according to the area ratio of R, G and B pixels or dots arranged in a side-by-side configuration is a simple method that needs only to adjust the areas of dots. However, the R, G and B dots must be aligned with each other with accuracy better than the dot dimension. This is a drawback of the method in actually producing multicolor hologram display structures in large quantity with high reproducibility and high stability.

In the above-mentioned color pattern producing method proposed by the present applicant, the amount of active monomer or oligomer contained in the swelling film is adjusted by controlling the amount of light applied to the swelling film before or after the swelling film is brought into close contact with the photosensitive material having interference fringes already recorded therein, thereby adjusting the rate of swelling of the interference fringes (i.e. the distance between the interference fringes) and thus adjusting the reconstructed wavelength to a predetermined one. In other words, the reconstructed color is adjusted by controlling the amount of light applied to the swelling film. In this specification, the method of adjusting the reconstructed wavelength from a volume hologram will hereinafter be referred to as "color tuning", and a swelling film used for this purpose will be referred to as "a color tuning film".

However, it is not always easy to control the light quantity accurately for generating a predetermined color, and the reproduction of the reconstructed color may become unstable.

In view of the above-described problems with the prior art, an object of the present invention is to provide a multicolor hologram recording structure, e.g. a multicolor hologram display structure, which is capable of presenting an intermediate color with high reproducibility and which requires a favorably relaxed accuracy for alignment between hologram original plates of different colors.

Another object of the present invention is to provide a multicolor hologram recording structure capable of displaying three or more colors, e.g. R, G and B, or intermediate colors by combining together volume holograms recorded by two wavelengths and the color tuning, or a multicolor hologram recording structure that appears to be almost white when it is seen in its entirety.

To attain the above-described objects, the present invention provides a multicolor hologram recording structure having at least two multi-recorded or superimposed volume holograms that diffract light of different wavelengths, respectively. The multicolor hologram recording structure includes an intermediate color pattern region consisting essentially of dots formed from two of the at least two multi-recorded or superimposed holograms and a background of either of the two holograms that is recorded between the dots.

In addition, the present invention provides a multicolor hologram recording structure having at least two multi-recorded or superimposed volume holograms that diffract light of different wavelengths, respectively. The multicolor hologram recording structure includes an intermediate color pattern region consisting essentially of one of the at least two volume holograms that is recorded over the whole area of the region and another hologram multi-recorded or superimposed over small dots in the region.

It is desirable for the above multicolor hologram recording structures to include, in addition to the intermediate color pattern region, primary color pattern regions having respective holograms recorded therein independently of each other, and another intermediate color pattern region consisting essentially of two or more different holograms multi-recorded or superimposed over the whole area thereof.

The multicolor hologram recording structures may include a region where the dots have a different area ratio. It should be noted that each of the above-described holograms may be a reflection scattering type hologram, for example.

In addition, the present invention provides a multicolor hologram recording structure having at least two multi-recorded volume holograms that diffract light of different wavelengths, respectively. The volume holograms are subjected to color tuning by a color tuning film containing a penetrative monomer or oligomer diffusible from the surface to the outside, wherein the penetrative monomer or oligomer has been deactivated according to a predetermined deactivation pattern, so that a portion of the volume holograms that corresponds to a portion of the color tuning film other than the deactivation pattern is swelled by the penetrative monomer or oligomer diffused from the color tuning film so as to diffract light of wavelength different from light diffracted by a portion of the volume holograms that corresponds to the deactivation pattern.

In this case, the arrangement may be such that the multi-recorded volume holograms are recorded over the whole effective area, and the deactivation pattern consists essentially of dots. The multicolor hologram recording structure may be used as a hologram reflecting and scattering plate for a liquid-crystal display device. The arrangement may also be such that the multicolor hologram recording structure includes a region where the dots have a different area ratio.

Further, the multi-recorded volume holograms may be recorded in separate pattern regions, respectively. In this case, the arrangement may be such that a region swelled by the color tuning film and an unswollen region form dots that can reproduce three colors, i.e. R (red), G (green) and B (blue). The multicolor hologram recording structure may include a region where the dots have a different area ratio.

It should be noted that when a color tuning film is used, it may be integrally provided on the multicolor hologram recording structure. In a case where the color tuning film has releasability, it may be removed after the color tuning process.

In one multicolor hologram recording structure according to the present invention, an intermediate color pattern region obtained on the basis of the dot area ratio is formed from a hologram of a background color recorded over the whole area of the region and dots of a hologram of another color superimposed over the background-color hologram. Accordingly, the accuracy required for alignment between hologram original plates of different colors is relaxed to a considerable extent in comparison to a case where dots of different colors need to be aligned with each other. Moreover, an intermediate color is attained on the basis of the dot area ratio, but not the hologram recording intensity. Therefore, an intermediate color can be generated with high reproducibility and high stability. Accordingly, multicolor hologram display structures and the like can be produced in large quantity with high reproducibility and high stability.

In another multicolor hologram recording structure according to the present invention, a color different from a recorded color can be reproduced simply by color-tuning a region of a multi-recorded volume hologram by using a color tuning film, and any desired color pattern can be produced in large quantity with high reproducibility by additive color mixing of the recorded color and the color obtained by the color tuning. In addition, it is possible to readily obtain a hologram reflecting and scattering plate that appears to be almost white as a whole.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

### BRIEF DESCRIPTION OF THE DRAWINGS

Fig. 1 is a plan view of a multicolor hologram display structure according to one embodiment of the present invention.

Fig. 2 is a plan view of one mask pattern used in a process for producing the multicolor hologram display structure shown in Fig. 1.

Fig. 3 is a plan view of another mask pattern used in the process for producing the multicolor hologram display structure shown in Fig. 1.

Figs. 4(a) and 4(b) are diagrams for describing the step of deactivating a part of each recording photosensitive material in the process for producing the multicolor hologram display structure shown in Fig. 1.

Figs. 5(a) and 5(b) are diagrams for describing the step of recording a hologram in each recording photosensitive material in the process for producing the multicolor hologram display structure shown in Fig. 1.

Fig. 6 is a diagram for describing the step of reproducing the multicolor hologram display structure shown in Fig. 1 from original plates.

Figs. 7(a) to 7(e) are diagrams showing the state of each region of the multicolor hologram display structure shown in Fig. 1.

Fig. 8 is a diagram for describing the principle of generation of intermediate colors in the multicolor hologram display structure shown in Fig. 1.

Figs. 9(a) to 9(c) are diagrams showing a part of a process for recording a multicolor hologram recording structure according to another embodiment of the present invention.

Figs. 10(a) to 10(c) are diagrams showing the remaining part of the multicolor hologram recording structure recording process according to the second embodiment of the present invention.

Figs. 11(a) and 11(b) are graphs showing a specific example of diffraction efficiency distribution of the multicolor hologram recording structure obtained by the process shown in Figs. 9(a) to 10(c).

Fig. 12 is a sectional view of a liquid-crystal display device using a white hologram reflecting and scattering plate according to the present invention.

Figs. 13(a) to 13(c) are diagrams showing a part of a multicolor hologram recording structure recording process as a modification of the process shown in Figs. 9(a) to 10(c).

Figs. 14(a) and 14(b) are diagrams showing the remaining part of the multicolor hologram recording structure recording process as a modification of the process shown in Figs. 9(a) to 10(c).

Figs. 15(a) and 15(b) are diagrams showing another form of the remaining part of the multicolor hologram recording structure recording process as a modification of the process shown in Figs. 9(a) to 10(c).

Figs. 16(a) to 16(d3) are diagrams for describing a conventional method of producing a hologram color display structure.

Figs. 17(a) to 17(d3) are diagrams for describing another conventional method of producing a hologram color display structure.

### DESCRIPTION OF THE PREFERRED EMBODIMENTS

Embodiments of the multicolor hologram recording structure according to the present invention will be described below. First, an embodiment of a first multicolor hologram recording structure according to the present invention will be described.

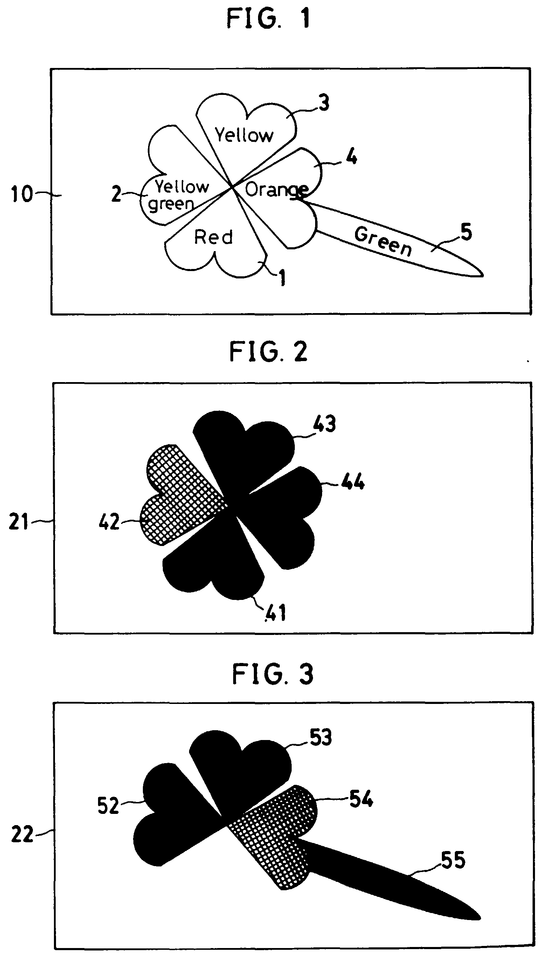

Let us consider producing a hologram display structure 10, as shown in Fig. 1, from a red-diffracting volume hologram and a green-diffracting volume hologram. The hologram display structure 10 displays in a colorless, transparent background a flower pattern consisting essentially of a red petal region 1, a yellow green petal region 2, a yellow petal region 3, and an orange petal region 4, together with a pattern consisting essentially of a green stem region 5.

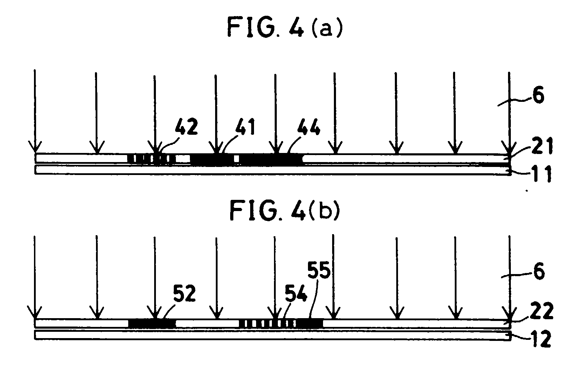

For this purpose, as shown in Figs. 4(a) and 4(b), two volume hologram recording photosensitive materials 11 and 12 made of a photopolymer or the like are prepared. As shown in Fig. 4(a), a red mask pattern 21 as shown in Fig. 2 is laid over one recording photosensitive material 11, and this is illuminated from the mask pattern side with ultraviolet rays 6 to which the recording photosensitive material 11 is sensitive. In the mask pattern 21, pattern regions 41, 43 and 44 respectively corresponding to the red petal region 1, yellow petal region 3 and orange petal region 4 of the hologram display structure 10 are opaque to the ultraviolet rays 6. A pattern region 42 corresponding to the yellow green petal region 2 of the hologram display structure 10 is a 50% dot region, and the dots in the pattern region 42 are opaque to the ultraviolet rays 6. Accordingly, all the portions of the recording photosensitive material 11 that correspond to the pattern regions 41, 43 and 44 are not exposed to the ultraviolet rays 6 but remain photosensitive. In that portion of the recording photosensitive material 11 which corresponds to the pattern region 42, portions corresponding to the dots, which account for 50% in terms of the sum of areas, remain photosensitive. Portions of the recording photosensitive material 11 that correspond to regions of the mask pattern 21 other than the pattern regions 41, 43 and 44, together with the portions of the pattern region 42 other than the dots, which account for the remaining 50% of the area of the pattern region 42, are exposed to the ultraviolet rays 6 and thus deactivated.

As shown in Fig. 4(b), a green mask pattern 22 as shown in Fig. 3 is laid over the other recording photosensitive material 12, and this is illuminated from the mask pattern side with ultraviolet rays 6 to which the recording photosensitive material 12 is sensitive. In the mask pattern 22, pattern regions 52, 53 and 55 respectively corresponding to the yellow green petal region 2, yellow petal region 3 and green stem region 5 of the hologram display structure 10 are opaque to the ultraviolet rays 6. A pattern region 54 corresponding to the orange petal region 4 of the hologram display structure 10 is a 50% dot region, and the dots in the pattern region 54 are opaque to the ultraviolet rays 6. Accordingly, all the portions of the recording photosensitive material 12 that correspond to the pattern regions 52, 53 and 55 are not exposed to the ultraviolet rays 6 but remain photosensitive. In that portion of the recording photosensitive material 12 which corresponds to the pattern region 54, portions corresponding to the dots, which account for 50% in terms of the sum of areas, remain photosensitive. Portions of the recording photosensitive material 12 that correspond to regions of the mask pattern 22 other than the pattern regions 52, 53 and 55, together with the portions of the pattern region 54 other than the dots, which account for the remaining 50% of the area of the pattern region 54, are exposed to the ultraviolet rays 6 and thus deactivated.

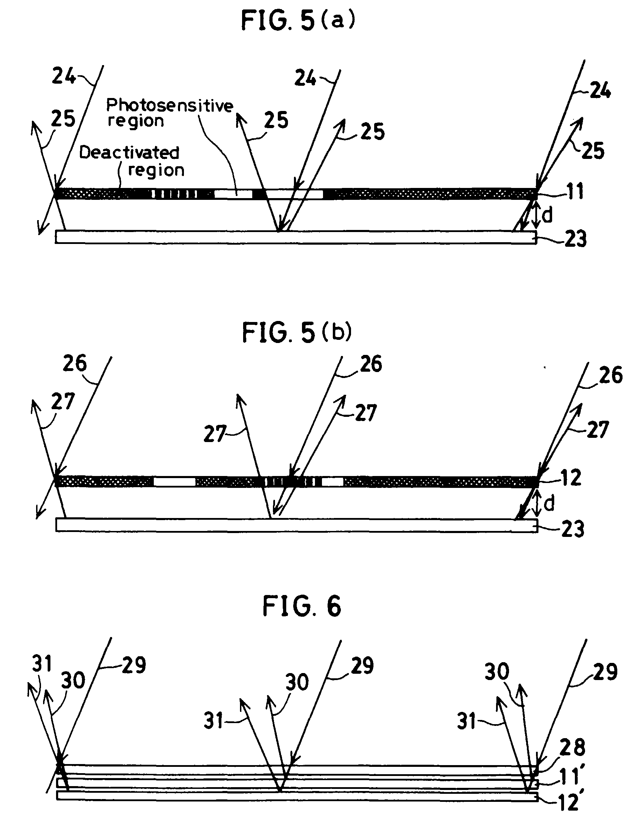

Next, a red-diffracting volume hologram that reflects and scatters as well as diffracts light of wavelength in the red region (e.g. wavelength 647 nanometers) is recorded in the undeactivated regions (photosensitive regions) of the recording photosensitive material 11 having some regions deactivated through the red mask pattern 21 as described above. Similarly, a green-diffracting volume hologram that reflects and scatters as well as diffracts light of wavelength in the green region (e.g. wavelength 532 nanometers) is recorded in the undeactivated regions (photosensitive regions) of the recording photosensitive material 12 having some regions deactivated through the green mask pattern 22. For the hologram recording process, as shown in Figs. 5(a) and 5(b), a reflecting and scattering plate 23 is disposed at the back of each of the recording photosensitive materials 11 and 12 having some regions deactivated as stated above at a predetermined distance d from the back of each recording photosensitive material to form a hologram recording setup. Then, light 24 of wavelength in the red region is made incident on the recording photosensitive material 11 from the photosensitive material side of the hologram recording setup at a predetermined incident angle. Light 25 reflected and scattered by the reflecting and scattering plate 23 after passing through the recording photosensitive material 11 is caused to interfere with the incident light 24 in the photosensitive regions, thereby recording a red-diffracting volume hologram that reflects and scatters as well as diffracts light of wavelength in the red region. Similarly, light 26 of wavelength in the green region is made incident on the recording photosensitive material 12 from the photosensitive material side of the hologram recording setup at a predetermined incident angle. Light 27 reflected and scattered by the reflecting and scattering plate 23 after passing through the recording photosensitive material 12 is caused to interfere with the incident light 26 in the photosensitive regions, thereby recording a green-diffracting volume hologram that reflects and scatters as well as diffracts light of wavelength in the green region. It should be noted that the distance d is set depending upon the desired reflecting and scattering characteristics of a volume hologram to be recorded. The distance d may be set at d≒0. That is, the reflecting and scattering plate 23 may be placed in close contact with each recording photosensitive material.

The films 11' and 12' having the red-diffracting volume hologram and green-diffracting volume hologram recorded in the undeactivated regions are superimposed in register with each other to form a hologram display structure 10 such as that shown in Fig. 1. Alternatively, as shown in Fig. 6, another volume hologram recording photosensitive material 28 is laid over the films 11' and 12', and illuminating light 29 including light of wavelength in the red region (e.g. wavelength 647 nanometers) and light of wavelength in the green region (e.g. wavelength 532 nanometers) is made incident from a side of the stack closer to the recording photosensitive material 28. Consequently, the incident light 29, light 30 (light of wavelength in the red region) diffracted from the hologram regions of the film 11' and light 31 (light of wavelength in the green region) diffracted from the hologram regions of the film 12' interfere with each other in the recording photosensitive material 28, thereby enabling the red- and green-diffracting volume holograms to be multi-recorded. As a result, the hologram display structure 10 shown in Fig. 1 is obtained.

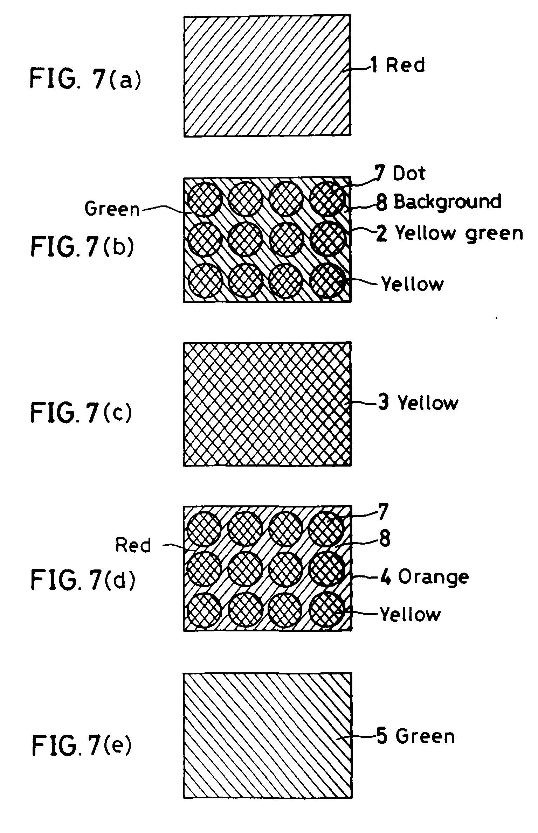

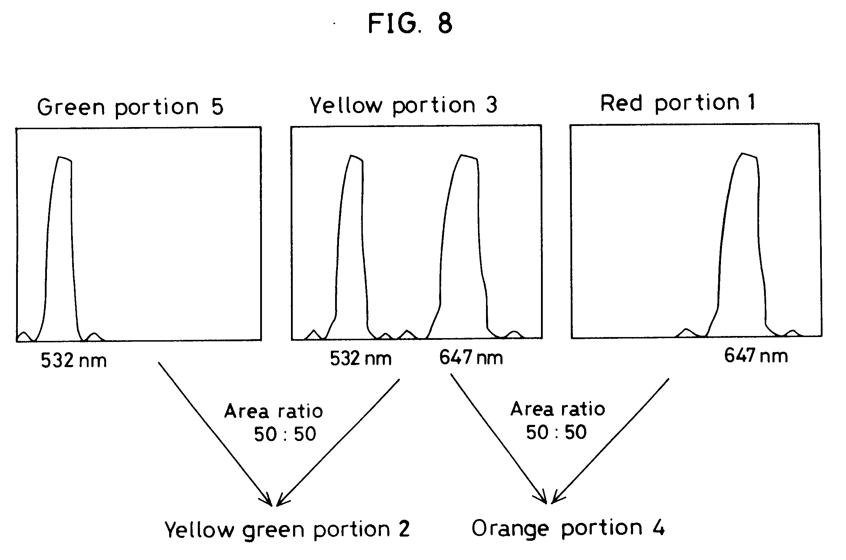

The state of each of the regions 1 to 5 of the hologram display structure 10 is shown in Figs. 7(a) to 7(e). Let us explain these regions 1 to 5 in order from those which are easier to understand. As shown in Fig. 7(a), the region 1 has the record of only a red-reflecting and scattering hologram (represented by the upward oblique hatching lines in the figure), and appears to be red under white illuminating light. As shown in Fig. 7(e), the region 5 has the record of only a green-reflecting and scattering hologram (represented by the downward oblique hatching lines in the figure), and appears to be green under white illuminating light. As shown in Fig. 7(c), the region 3 has the record of a red-reflecting and scattering hologram and a green-reflecting and scattering hologram, which are superimposed on one another. In the region 3, light of wavelengths in the red and green regions (e.g. wavelengths 647 nanometers and 532 nanometers) (see Fig. 8) are diffracted, and the region 3 appears to be yellow by additive color mixing.

As shown in Fig. 7(b), the region 2 has small dots 7 provided in a background 8 at a dot percent of 50%. Each dot 7 has the record of a red-reflecting and scattering hologram and a green-reflecting and scattering hologram, which are superimposed on one another, as in the case of the region 3, and appears to be yellow. The background 8 has the record of only a green-reflecting and scattering hologram, and appears to be green. Thus, the dots 7 are present in the background 8 and appear to be yellow, whereas the background 8 appears to be green. Therefore, the region 2 appears to be yellow green, as shown in Fig. 8, by additive color mixing of yellow and green in the ratio 50:50.

As shown in Fig. 7(d), the region 4 has small dots 7 provided in a background 8 at a dot percent of 50%. Each dot 7 has the record of a red-reflecting and scattering hologram and a green-reflecting and scattering hologram, which are superimposed on one another, as in the case of the region 3, and appears to be yellow. The background 8 has the record of only a red-reflecting and scattering hologram, and appears to be red. Thus, the dots 7 are present in the background 8 and appear to be yellow, whereas the background 8 appears to be red. Therefore, the region 4 appears to be orange, as shown in Fig. 8, by additive color mixing of yellow and red in the ratio 50:50.

Although in the foregoing the regions 2 and 4 are 50% dot regions, it should be noted that the dot percent in each region may be set as desired. Accordingly, it is possible to generate desired intermediate colors between green and yellow and between yellow and red.

In the foregoing description, the hologram display structure 10 is formed from a multiple recording structure or stack structure of holograms of two colors, i.e. a red-diffracting volume hologram and a green-diffracting volume hologram. However, it is also possible to add a blue-diffracting volume hologram to the two volume holograms and to form the hologram display structure 10 from a multiple recording structure or stack structure of holograms of three colors. In this case, it is only necessary to add a mask pattern, a recording photosensitive material and a recording wavelength for another color to the above-described production process. Thus, the production process can readily be expanded to obtain a hologram display structure 10 comprising holograms of three colors. Therefore, a detailed description thereof is omitted.

The following is a description of another multicolor hologram recording structure according to the present invention that is obtained by combining together volume holograms recorded with two wavelengths and color tuning, together with a method of producing the multicolor hologram recording structure.

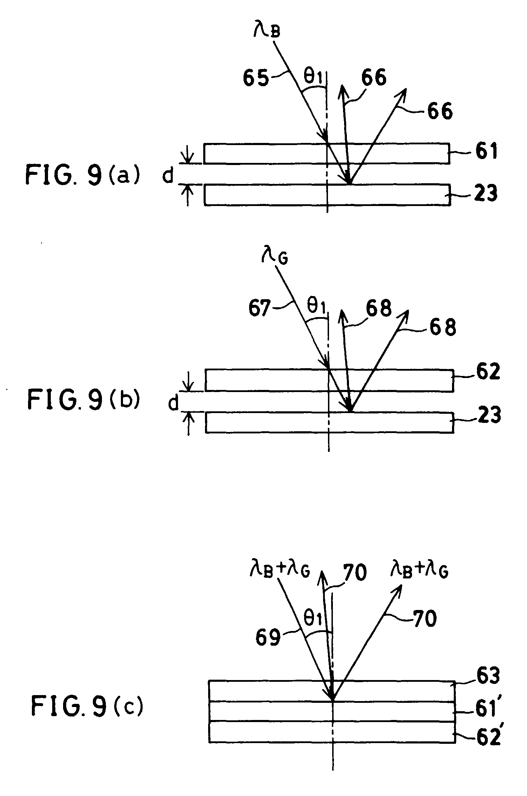

First, as shown in Figs. 9(a) to 9(c), two volume hologram recording photosensitive materials 61 and 62 made of a photopolymer or the like are prepared. As shown in Fig. 9(a), a reflecting and scattering plate 23 is disposed at the back of one recording photosensitive material 61 at a predetermined distance d to form a hologram recording setup. Light 65 of wavelength λ_{B} in the blue region is made incident on the whole effective area of the recording photosensitive material 61 from the recording photosensitive material side of the hologram recording setup at an incident angle θ₁. Light 66 reflected and scattered by the reflecting and scattering plate 23 after passing through the recording photosensitive material 61 and the incident light 65 are caused to interfere with each other in the photosensitive region, thereby recording a blue-diffracting volume hologram 61' that reflects and scatters as well as diffracts light of wavelength in the blue region uniformly from the whole effective area. Similarly, as shown in Fig. 9(b), a reflecting and scattering plate 23 is disposed at the back of the recording photosensitive material 62 at a predetermined distance d to form a hologram recording setup. Light 67 of wavelength λ_{G} in the green region is made incident on the whole effective area of the recording photosensitive material 62 from the recording photosensitive material side of the hologram recording setup at the same incident angle θ₁. Light 66 reflected and scattered by the reflecting and scattering plate 23 after passing through the recording photosensitive material 62 and the incident light 67 are caused to interfere with each other in the photosensitive region, thereby recording a green-diffracting volume hologram 62' that reflects and scatters as well as diffracts light of wavelength in the green region uniformly from the whole effective area. It should be noted that the distance d is set depending upon the desired reflecting and scattering characteristics of a volume hologram to be recorded. The distance d may be set at d≒0. That is, the reflecting and scattering plate 23 may be placed in close contact with each recording photosensitive material.

Thereafter, as shown in Fig. 9(c), the blue-diffracting volume hologram 61' and the green-diffracting volume hologram 62' are superimposed on one another, and another volume hologram recording photosensitive material 63 is placed over the hologram stack structure in close contact with it or with a slight gap therebetween. Uniform illuminating light 69 for reproduction that includes wavelengths λ_{B} and λ_{G} is made incident on the stack structure at the incident angle θ₁ from a side thereof closer to the volume hologram recording photosensitive material 63. Consequently, the illuminating light 69 interferes in the recording photosensitive material 63 with reflected, scattered and diffracted light 70 including light of wavelength λ_{B} diffracted by the volume hologram 61' and light of wavelength λ_{G} diffracted by the volume hologram 62', thereby reproducing a hologram 63' having multiple recording of a blue-diffracting volume hologram that reflects and scatters as well as diffracts light of wavelength in the blue region uniformly from the whole effective area and a green-diffracting volume hologram that reflects and scatters as well as diffracts light of wavelength in the green region uniformly from the whole effective area. It should be noted that the above-described reproduction method may be replaced by a method in which exposure processes such as those shown in Figs. 9(a) and 9(b) are carried out successively or simultaneously on a single recording photosensitive material 63, thereby producing a hologram 63' having multiple recording of a blue-diffracting volume hologram that reflects and scatters as well as diffracts light of wavelength in the blue region uniformly from the whole effective area and a green-diffracting volume hologram that reflects and scatters as well as diffracts light of wavelength in the green region uniformly from the whole effective area.

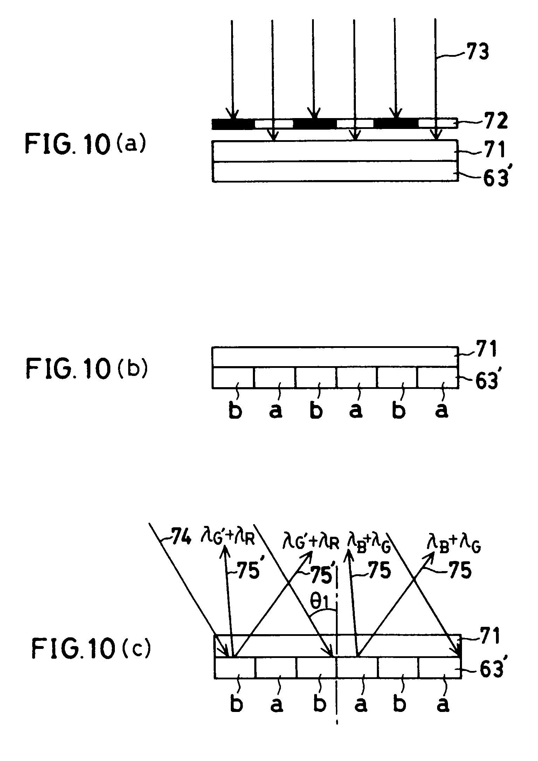

Next, as shown in Fig. 10(a), a swelling film (hereinafter referred to as "color tuning film") 71 prepared by mixing a monomer or an oligomer, a photopolymerization initiator, etc. into a binder polymer as in the case of photopolymers, as described above with reference to Figs. 16(a) to 17(d3) is laid over the hologram 63' produced as described above, and a mask 72 provided with a repeated pattern of transparent openings, e.g. dots, is placed over the stack of the hologram 63' and the color tuning film 71. Then, the stack of the hologram 63' and the color tuning film 71 is irradiated through the mask 72 with light 73, e.g. ultraviolet rays, in a quantity sufficient to polymerize and thus deactivate approximately all the active penetrative monomer or oligomer in the color tuning film 71, thereby substantially deactivating portions of the color tuning film 71 that correspond to the transparent openings of the mask 72. After the light irradiation, the stack of the hologram 63' and the color tuning film 71 is heated at a sufficiently high temperature and for a sufficiently long period of time to allow the active penetrative monomer or oligomer in the color tuning film 71 to diffuse into the hologram 63'. Consequently, as shown in Fig. 10(b), in portions b of the hologram 63' that correspond to portions of the color tuning film 71 not struck by the light 73, the distance between the interference fringes of the blue-diffracting volume hologram swells, and this hologram becomes a green-diffracting volume hologram that reflects and diffracts light of wavelength in the green region. The distance between the interference fringes of the green-diffracting volume hologram in the portions b similarly swells, and this hologram becomes a red-diffracting volume hologram that reflects and diffracts light of wavelength in the red region. In portions a of the hologram 63' that correspond to portions of the color tuning film 71 struck by the light 73 and thus substantially deactivated, the blue-diffracting volume hologram and the green-diffracting volume hologram have almost no change and remain substantially the same.

Then, as shown in Fig. 10(c), the hologram 63' subjected to the above-described color tuning is irradiated with illuminating light 74, which includes light of wavelength λ_{B} in the blue region, light of wavelengths λ_{G} and λ_{G}' in the green region and light of wavelength λ_{R} in the red region, at the same incident angle θ₁ as that in the hologram recording process. Consequently, light 75 of wavelengths λ_{B} and λ_{G} is reflected, scattered and diffracted from the portions a of the hologram 63', and light 75' of wavelengths λ_{G}' and λ_{R} is reflected, scattered and diffracted from the portions b of the hologram 63'. The light 75 appears to be cyan, and the light 75' appears to be yellow.

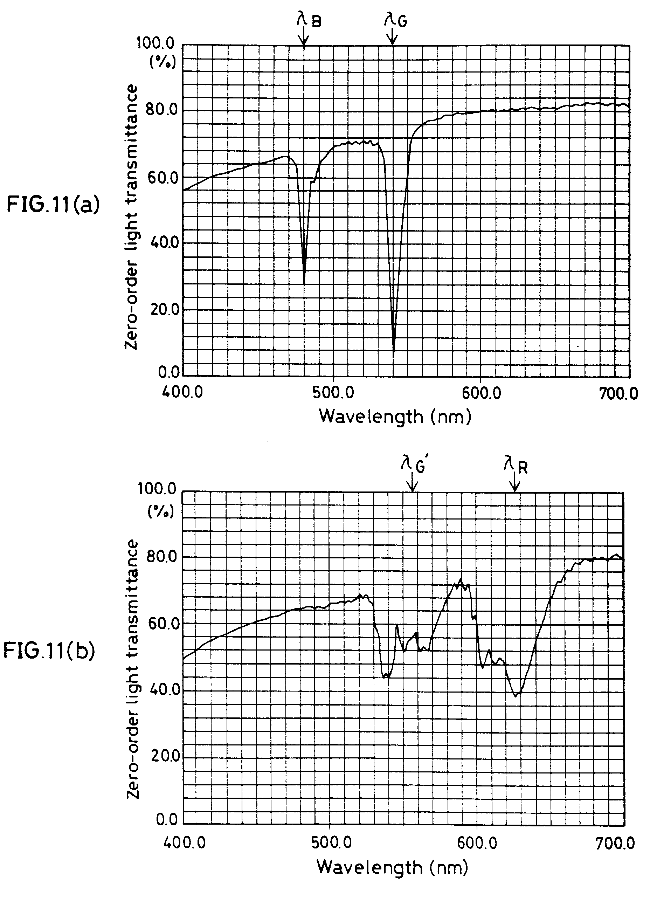

Figs. 11(a) and 11(b) are graphs showing a specific example of diffraction efficiency distributions of the volume holograms in the portions a and b of the hologram 63' shown in Fig. 10(c). It should, however, be noted that the ordinate axis of each graph does not directly show the diffraction efficiency but shows the zero-order light transmittance, which is in complementary relation to the diffraction efficiency. In this specific example, Omnidex706 (manufactured by Du Pont Co., Ltd.) was used as the photopolymer constituting the recording photosensitive material 63, and CTF75 (Du Pont Co., Ltd.) was used as the color tuning film 71. The heating process for diffusing the active penetrative monomer or oligomer was carried out at 120^{o}C for 2 hours. It will be clearly understood from the specific example shown in Figs. 11(a) and 11(b) that light of wavelength λ_{B} in the blue region and light of wavelength λ_{G} in the green region are reflected, scattered and diffracted from the portions a where the hologram was not subjected to color tuning [Fig. 11(a)], and that light of wavelength λ_{G}' in the green region and light of wavelength λ_{R} in the red region are reflected, scattered and diffracted from the portions b where the hologram was subjected to color tuning.

If the portions a and b are fine, the whole hologram 63' appears to be a color produced by additive color mixing of cyan and yellow. However, an intermediate color can be reproduced because the color mixing proportion can be varied according to the area gradation or the density gradation by adjusting the ratio of the area of the transparent portions (corresponding to the area of the portions a) of the mask 72 to the area of the opaque portions (corresponding to the area of the portions b) of the mask 72 or adjusting the transmittance of the transparent portions of the mask 72, e.g. dots, or the amount of light 73 applied or adjusting the intensity ratio between B (blue) and G (green) laser light or the heat-treating conditions. The hologram 63' can be formed into a multicolor hologram display structure by arranging the mask 72 such that the areal gradation or the density gradation varies according to the position of the mask 72.

The hologram 63' can also be formed by similar adjustment into a hologram reflecting and scattering plate that appears to be almost white or greenish white as a whole by additive color mixing of cyan and yellow. Such a hologram reflecting and scattering plate can be used as a bright reflecting and scattering plate in a liquid-crystal display device.

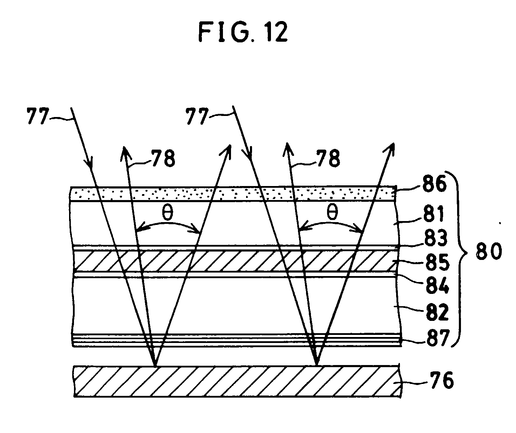

A liquid-crystal display device using such a hologram reflecting and scattering plate will briefly be described below. A white hologram reflecting and scattering plate according to the present invention is a hologram whereby light incident from a specific direction [the direction of illuminating light 74 in Fig. 10(c)] is diffusely reflected only in a direction toward a predetermined viewing zone. As shown in the sectional view of Fig. 12, a liquid-crystal display device using such a white hologram reflecting and scattering plate 76 according to the present invention is arranged such that the white hologram reflecting and scattering plate 76 is disposed on a side of a liquid-crystal display element 80 that is opposite to the viewing side. Illuminating light 77 entering the liquid-crystal display element 80 from the display side thereof is diffusely reflected by the white hologram reflecting and scattering plate 76 only in an angle range θ conforming to the viewing zone of the liquid-crystal display device, thereby enabling display to be effected without using a spontaneous emission type back light in bright. The liquid-crystal display element 80 is, for example, formed from a liquid-crystal layer 85, e.g. a twisted nematic liquid crystal, sandwiched between two glass substrates 81 and 82. The inner surface of one glass substrate 82 is provided with a uniform transparent opposed electrode 84, and the inner surface of the other glass substrate 81 is provided with transparent display electrodes 83 independently of each other for each pixel, together with a black matrix (not shown). It should be noted that in the case of a color display device, the inner surface of the glass substrate 81 is provided with transparent display electrodes 83 independently of each other for each of liquid-crystal cells R, G and B, together with a color filter and a black matrix. The respective sides of the electrodes 83 and 84 that are closer to the liquid-crystal layer 85 are provided with alignment layers (not shown), respectively. Further, a polarizing plate 86 is pasted on the outer surface of the viewing-side glass substrate 81, and a polarizing plate 87 is pasted on the outer surface of the glass substrate 82 on a side of the liquid-crystal display element 80 that is opposite to the viewing side. The polarizing plates 86 and 87 are, for example, disposed such that the transmission axes thereof perpendicular intersect each other. The voltage applied between the transparent display and opposed electrodes of the liquid-crystal display element 80 is controlled to change the transmission condition of the display element 80, thereby enabling a numeral, a character, a symbol, a pattern, etc. to be selectively displayed.

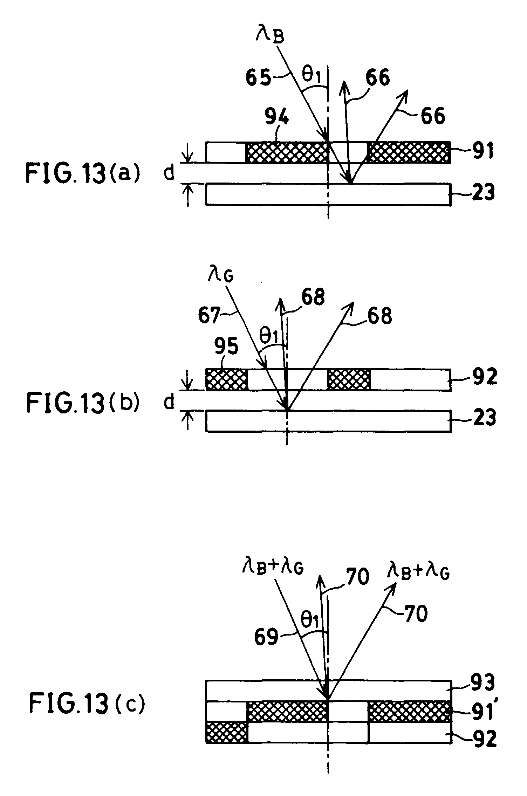

In the case of Figs. 9(a) to 9(c), a blue-diffracting volume hologram and a green-diffracting volume hologram are recorded all over the respective effective areas of the recording photosensitive materials 61 and 62. Now, let us consider recording a volume hologram only in desired pattern regions of the recording photosensitive materials 61 and 62 at the stage shown in Figs. 9(a) and 9(b). The recording process will be described below with reference to Figs. 13(a) to 13(c). Two volume hologram recording photosensitive materials 91 and 92 are prepared. A blue mask pattern is laid over the recording photosensitive material 91 for recording a blue-diffracting volume hologram, and ultraviolet rays to which the recording photosensitive material 91 is sensitive are applied to the stack of the recording photosensitive material 91 and the blue mask pattern from the mask pattern side by a method similar to that in the process shown in Figs. 4(a) and 4(b), thereby exposing and thus deactivating pattern regions 94 of the recording photosensitive material 91 as shown in Fig. 13(a). A green mask pattern is laid over the recording photosensitive material 92 for recording a green-diffracting volume hologram, and ultraviolet rays to which the recording photosensitive material 92 is sensitive are applied to the stack of the recording photosensitive material 92 and the green mask pattern from the mask pattern side, thereby exposing and thus deactivating pattern regions 95 of the recording photosensitive material 92 as shown in Fig. 13(b).

Thereafter, as shown in Figs. 13(a) and 13(b), the undeactivated regions of the recording photosensitive materials 91 and 92 are subjected to a recording process similar to that shown in Figs. 9(a) and 9(b), thereby recording a blue-diffracting volume hologram 91' that reflects and scatters as well as diffracts light of wavelength in the blue region from only the undeactivated regions and also recording a green-diffracting volume hologram 92' that reflects and scatters as well as diffracts light of wavelength in the green region from only the undeactivated regions. Thereafter, as shown in Fig. 13(c), the blue-diffracting volume hologram 91' and the green-diffracting volume hologram 92' are superimposed on one another, and another volume hologram recording photosensitive material 93 is placed over the hologram stack structure in close contact with it or with a slight gap therebetween as in the case of Fig. 9(c). Then, uniform illuminating light 69 for reproduction that includes wavelengths λ_{B} and λ_{G} is made incident on the stack structure at the incident angle θ₁ from a side thereof closer to the volume hologram recording photosensitive material 93. Consequently, the illuminating light 69 interferes in the recording photosensitive material 93 with reflected, scattered and diffracted light 70 including light of wavelength λ_{B} diffracted by the volume hologram 91' and light of wavelength λ_{G} diffracted by the volume hologram 92', thereby reproducing a hologram 93' having multiple recording of a blue-diffracting volume hologram that reflects and scatters as well as diffracts light of wavelength in the blue region from regions patterned for the blue-diffracting volume hologram and a green-diffracting volume hologram that reflects and scatters as well as diffracts light of wavelength in the green region from regions patterned for the green-diffracting volume hologram. It should be noted that the above-described reproduction method may be replaced by a method in which exposure processes such as those shown in Figs. 13(a) and 13(b) are carried out successively or simultaneously on a single recording photosensitive material 93, thereby producing a hologram 93' having multiple recording of a blue-diffracting volume hologram that reflects and scatters as well as diffracts light of wavelength in the blue region from regions patterned for the blue-diffracting volume hologram and a green-diffracting volume hologram that reflects and scatters as well as diffracts light of wavelength in the green region from regions patterned for the green-diffracting volume hologram.

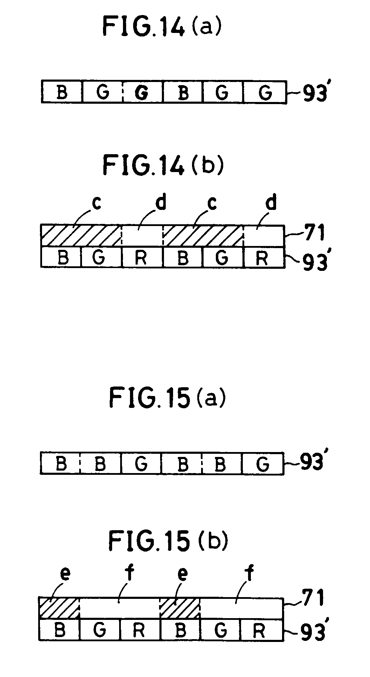

The hologram 93' reproduced or multi-recorded as described above has a structure such as that illustrated in Fig. 14(a) or 15(a), in which blue-diffracting volume hologram regions B and green-diffracting volume hologram regions G are alternately arranged in a side-by-side configuration. Alternatively, the hologram 93' has a structure (not shown) in which green-diffracting volume hologram regions G and blue-diffracting volume hologram regions B partly overlap each other. Under certain circumstances, there are regions where neither blue-diffracting volume hologram regions B nor green-diffracting volume hologram regions G are recorded. In Figs. 14(a) and 15(a), blue-diffracting volume hologram regions B and green-diffracting volume hologram regions G are alternately arranged so as to lie adjacent to each other. In the case of Fig. 14(a), the regions G are twice as wide as the regions B. In the case of Fig. 15(a), the regions B are twice as wide as the regions G. The hologram 93' having the blue- and green-diffracting volume hologram regions B and G multi-recorded therein as described above is subjected to color tuning by a color tuning film 71 as in the case of Fig. 10(a) and 10(b). In this case, either or both of the blue-diffracting volume hologram and the green-diffracting volume hologram in predetermined regions are subjected to color tuning by the color tuning film 71. Consequently, the distance between the interference fringes of the blue-diffracting volume hologram swells, and this hologram becomes a green-diffracting volume hologram that reflects and diffracts light of wavelength in the green region, and the distance between the interference fringes of the green-diffracting volume hologram similarly swells, and this hologram becomes a red-diffracting volume hologram that reflects and diffracts light of wavelength in the red region.

In the case of Fig. 14(b), regions c of the color tuning film 71 are deactivated and therefore do not effect color tuning, but regions d are effective and perform color tuning. Consequently, a half of each green-diffracting volume hologram region G of the hologram 93' is converted into a red-diffracting volume hologram R. In the case of Fig. 15(b), regions e of the color tuning film 71 are deactivated so as not to effect color tuning, but regions f are effective and perform color tuning. Consequently, a half of each blue-diffracting volume hologram region B of the hologram 93' is converted into a green-diffracting volume hologram G, and each green-diffracting volume hologram region G of the hologram 93' is converted into a red-diffracting volume hologram R. In either case, three regions approximately equal in size and lying adjacent to each other become a blue-diffracting volume hologram region B, a green-diffracting volume hologram region G and a red-diffracting volume hologram region R, respectively. Therefore, each region becomes a small pixel, and any desired color pattern can be displayed by selecting a pattern and transmittance of a mask used to deactivate each of the recording photosensitive materials 61 and 62 and a pattern and transmittance of a mask used to deactivate the color tuning film 71 so that a desired color can be presented at a desired position by additive color mixing of R, G and B according to the pixel areal gradation or density gradation or a combination thereof.

It should be noted that in the case of the hologram 63' or 93' partially subjected to color tuning by the color tuning film 71, the color tuning film 71 may be separated from the final multicolor hologram recording structure, or it may be left integral with it.

Although the multicolor hologram recording structure according to the present invention has been described by way of embodiments, the present invention is not necessarily limited to the described embodiments but may be modified in various ways. It should be noted that holograms used in the present invention are not necessarily limited to reflection scattering type volume holograms but may be transmission scattering type volume holograms or volume holograms capable of reproducing patterns, e.g. stereoscopic images. As mask patterns used in the present invention, any of positive and negative patterns can be used. In the case of a mask pattern with dots formed thereon, the dot area ratio is a key parameter for generation of an intermediate color.

It should be noted that dots used in the present invention include not only aggregates of figures, e.g. small circles or rectangles, but also aggregates of fine stripes. In a case where a desired color tone is expressed by patterns or the like using the additive color mixing scheme according to the present invention, the size of dots must be so small as to allow such patterns to appear to be natural when viewed. It is possible to use various numbers of lines per inch. However, it is desirable to select one in the range of from 30 lines per inch to 1,000 lines per inch, preferably in the range of from 100 lines per inch to 400 lines per inch. If the number of lines per inch is excessively small, each dot is undesirably distinguishable by eye. If the dots are excessively fine, effective action cannot be obtained in the patterning process. It should be noted that dots are produced by a conventional screening method. In the amplitude modulation (AM) screening, spots of varying sizes are all arranged at equal intervals. In the frequency modulation (FM) screening, spots are of the same size at all times, but the distance therebetween varies (see "Printing Journal", 1994 (Vol.77) 6, p.51). In the FM screening, a velvet screen, a crystal raster screen, a diamond screen, etc. are used (see "Printing Journal", 1994 (Vol.77) 7, p.32).

As will be clear from the foregoing description, the multicolor hologram recording structure according to the present invention provides the following advantageous effects: An intermediate color pattern region obtained on the basis of the dot area ratio is formed from a hologram of a background color recorded over the whole area of the region and dots of a hologram of another color superimposed over the background-color hologram. Accordingly, the accuracy required for alignment between hologram original plates of different colors is relaxed to a considerable extent in comparison to a case where dots of different colors need to be aligned with each other. Moreover, an intermediate color is attained on the basis of the dot area ratio, but not the hologram recording intensity. Therefore, an intermediate color can be generated with high reproducibility and high stability. Accordingly, multicolor hologram display structures can be produced in large quantity with high reproducibility and high stability.

In another multicolor hologram recording structure according to the present invention, a color different from a recorded color can be reproduced simply by color-tuning a region of a multi-recorded volume hologram by using a color tuning film, and any desired color pattern can be produced in large quantity with high reproducibility by additive color mixing of the recorded color and the color obtained by the color tuning. In addition, it is possible to readily obtain a hologram reflecting and scattering plate that appears to be almost white as a whole.

## Claims

1. In a multicolor hologram recording structure comprising at least two multi-recorded or superimposed volume holograms that diffract light of different wavelengths, respectively,
the improvement which includes an intermediate color pattern region consisting essentially of dots formed from two of said at least two multi-recorded or superimposed holograms and a background of either of said two holograms that is recorded between said dots.

2. In a multicolor hologram recording structure comprising at least two multi-recorded or superimposed volume holograms that diffract light of different wavelengths, respectively,
the improvement which includes an intermediate color pattern region consisting essentially of one of said at least two volume holograms that is recorded over a whole area of said region and another hologram multi-recorded or superimposed over small dots in said region.

3. A multicolor hologram recording structure according to claim 1 or 2, further includes, in addition to said intermediate color pattern region, primary color pattern regions having respective holograms recorded therein independently of each other, and another intermediate color pattern region consisting essentially of two or more different holograms multi-recorded or superimposed over a whole area thereof.

4. A multicolor hologram recording structure according to any one of claims 1 to 3, which includes a region where said dots have a different area ratio.

5. A multicolor hologram recording structure according to any one of claims 1 to 4, wherein said holograms are reflection scattering type holograms.

6. In a multicolor hologram recording structure comprising at least two multi-recorded volume holograms that diffract light of different wavelengths, respectively,
the improvement wherein said volume holograms are subjected to color tuning by a color tuning film containing a penetrative monomer or oligomer diffusible from a surface to an outside, wherein said penetrative monomer or oligomer has been deactivated according to a predetermined deactivation pattern, so that a portion of said volume holograms that corresponds to a portion of said color tuning film other than said deactivation pattern is swelled by said penetrative monomer or oligomer diffused from said color tuning film so as to diffract light of wavelength different from light diffracted by a portion of said volume holograms that corresponds to said deactivation pattern.

7. A multicolor hologram recording structure according to claim 6, wherein said multi-recorded volume holograms are recorded over a whole effective area, and said deactivation pattern consists essentially of dots.

8. A multicolor hologram recording structure according to claim 7, which is used as a hologram reflecting and scattering plate for a liquid-crystal display device.

9. A multicolor hologram recording structure according to claim 7, which includes a region where said dots have a different area ratio.

10. A multicolor hologram recording structure according to claim 6, wherein said multi-recorded volume holograms are recorded in separate pattern regions, respectively.

11. A multicolor hologram recording structure according to claim 10, wherein a region swelled by said color tuning film and an unswollen region form dots that can reproduce three colors, i.e. R (red), G (green) and B (blue).

12. A multicolor hologram recording structure according to claim 11, which includes a region where said dots have a different area ratio.

13. A multicolor hologram recording structure according to any one of claims 6 to 12, wherein said color tuning film is integrally provided on said multicolor hologram recording structure.
